# EUROPÄISCHE PATENTSCHRIFT

(11) **EP 1 613 928 B1**
(45) Veröffentlichungstag und Bekanntmachung des Hinweises auf die Patenterteilung: **23.01.2013**
(21) Anmeldenummer: 04726946.9
(22) Anmeldetag: 13.04.2004
(51) Int. Cl.: G01F 1/68, G01F 5/00, G01F 15/00, G01F 1/684

(54) **DIFFERENZDRUCKMITTEL FÜR EINE GASZÄHLERANORDNUNG MIT VERBESSERTER STRÖMUNGSGEOMETRIE**
DIFFERENTIAL PRESSURE MEANS FOR A GAS METER ARRANGEMENT, COMPRISING AN IMPROVED FLOW GEOMETRY
ENSEMBLE COMPTEUR A GAZ A GEOMETRIE D'ECOULEMENT AMELIOREE

(30) Priorität: 15.04.2003 DE 10317166
(43) Veröffentlichungstag der Anmeldung: 11.01.2006
(60) Teilanmeldung: 08021676.5
(73) Patentinhaber: Hydrometer GmbH, 91522 Ansbach (DE)
(72) Erfinder: MATTER, Daniel, CH-5200 Brugg (CH); KLEINER, Thomas, CH-5442 Fislisbach (CH); KRAMER, Beat, CH-5210 Windisch (CH)
(74) Vertreter: Diehl Patentabteilung
(86) Internationale Anmeldenummer: PCT/CH2004/000222
(87) Internationale Veröffentlichungsnummer: WO 2004/092687

(56) Entgegenhaltungen:
- GB-A- 1 469 648
- US-A- 2 929 248
- US-A- 3 838 598
- US-A- 3 840 051
- US-A- 5 341 848
- US-A- 5 918 279
- US-A- 6 145 544
- PATENT ABSTRACTS OF JAPAN vol. 011, no. 328 (P-629), 27. Oktober 1987 (1987-10-27) & JP 62 112014 A (HITACHI LTD;OTHERS: 01), 23. Mai 1987 (1987-05-23)

## Beschreibung

### TECHNISCHES GEBIET

Die vorliegende Erfindung bezieht sich auf das Gebiet der Messung von Gasbezug mit Durchflusssensoren und insbesondere thermischen Durchflusssensoren. Sie geht aus von einer Gaszähleranordnung zum Messen eines Gasverbrauchs gemäss Oberbegriff des unabhängigen Anspruchs 1.

### STAND DER TECHNIK

In der WO 01/96819 A1 wird ein Gaszähler offenbart, der als Energiemessgerät geeicht ist. Die Eichung beruht darauf, dass Sensorsignalwerte in Abhängigkeit der Durchflussrate eines Eichgases bestimmt und in Form einer Sensoreichkurve im Gaszähler gespeichert werden. Die Sensoreichkurve beziehungsweise die Sensorsignalwerte werden mit einem Signal-Umrechnungsfaktor und einem Brennwertfaktor für das Basis-Gasgemisch multipliziert, so dass das erhaltene Produkt einen Gasverbrauch in einer Energieeinheit angibt. Mit einem weiteren Korrekturfaktor kann wenigstens näherungsweise der tatsächliche Heizwert eines bezogenen Gasgemisches in der Energieeichung berücksichtigt werden. Als tatsächlicher Heizwert kann ein gemessener, über eine bestimmte Zeitspanne gemittelter Heizwert verwendet werden.

In dem U. S. Pat. No. 5'750'892 wird eine Anordnung zur Strömungsmessung mit einem Durchflusssensor in einem Bypass offenbart, bei der im Hauptstrom ein langgestrecktes laminares Strömungselement mit einer Vielzahl von Strömungskanälen vorhanden ist und die Anschlüsse des Bypasses innerhalb der Längserstreckung des Strömungselements lie-gen. Dadurch kann der Druckabfall über das Strömungselement bzw. den Bypass als Funktion der Volumendurchflussrate weitgehend linear gehalten werden, da nichtlineare Anteile aufgrund turbulenter Strömungsanteile im Eintritts- und Mündungsbereich des Bypasses und aufgrund eines nichtkonstanten Strömungsquerschnitts minimiert werden. Weiter hin ist aus der US 3,838,598 ein Bypass-gaszähler mit einem Differenz durch mittel in der Haupt leitung bekannt.

### DARSTELLUNG DER ERFINDUNG

Aufgabe der vorliegenden Erfindung ist es, eine Gaszähleranordnung mit einem Differenzdruckmittel anzugeben, wobei sich die Gaszähleranordnung durch einen verbesserten Messbereich auszeichnet. Diese Aufgabe wird erfindungsgemäss durch die Merkmale des unabhängigen Anspruchs 1 gelöst.

Die Erfindung umfasst ein Differenzdruckmittel, das in einer erfindungsgemäßen Gaszähleranordnung angeordnet ist, welche einen Gaszähler in einem Bypass zu einer Gasleitung zum Messen eines Gasbezugs durch die Gasleitung umfasst, wobei das Differenzdruckmittel zur Montage in der Gasleitung ausgelegt ist und eine Mehrzahl von Strömungskanälen aufweist, die einen typischen Durchmesser haben, wobei Strömungskanäle in verschiedenen Radialpositionen am Differenzdruckmittel vorhanden sind, wobei diejenigen Strömungskanäle, die näher an einer zentrumsnahen Radialposition am Differenzdruckmittel angeordnet sind, einen grösseren Durchmesser aufweisen als diejenigen Strömungskanäle, die näher an einer umfangsnahen Radialposition am Differenzdruckmittel angeordnet sind, die einen kleineren Durchmesser aufweisen. Durch verkleinerte Durchmesser an der Peripherie des Differenzdruckmittels wird für Bypässe, die in diesem Bereich von der Gasleitung abzweigen, eine vorteilhafte Druckerhöhung und damit Erhöhung des Messeffekts im Bypass für tiefe Durchflussraten in der Gasleitung erzielt. Ein solches Differenzdruckmittel gewähr-leistet eine verbesserte Messempfindlichkeit bei kleinen Volumenflüssen und einen vergrösserten Messbereich und ist daher für laminare Strömungsanordnungen besonders geeignet.

In einem Ausführungsbeispiel weisen die Strömungskanäle ausgehend von einer Mittelachse des Differenzdruckmittels einen mit zunehmender Radialposition monoton abnehmenden Durchmesser auf. Dadurch wird eine besonders vorteilhafte Linearisierung und Ausdehnung des laminaren Messbereichs erzielt.

In einem anderen Ausführungsbeispiel weisen die Eintrittsöffnungen und/oder Austrittsöffnungen der Strömungskanäle Ansenkwinkel, insbesondere im Winkelbereich 30°-90°, vorzugsweise 45°-75°, besonders bevorzugt 55°-65°, auf. Dies bewirkt einen verminderten Differenzdruck bei hohen Durchflussraten, so dass der Anteil der turbulenten Strömung bei hohen Durchflussraten gesenkt wird.

3 Durch die Ausführungsbeispiele gemäss Anspruch 3 und 5 wird der laminare Strömungsbereich in der Hauptleitung und damit die Linearität zwischen Volumenstrom in Hauptleitung und Bypass und der lineare Messbereich weiter verbessert.

Die Erfindung besteht in einer Gaszähleranordnung zum Messen eines Gasbezugs gemäß Anspruch 1 insbesondere im privaten, öffentlichen oder industriellen Bereich, umfassend einen Gaszähler.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNGEN

Es zeigen:
- Fig. 1: im Querschnitt eine schematische Darstellung der Gaszählergeometrie;
- Fig. 2: einen Vergleich relativer Druckverläufe für unterschiedliche bekannte Differenzdruckelemente;
- Fig. 3a, 3b: im Aufriss und im Querschnitt ein erfindungsgemässes Rohrbündel-Differenzdruckelement; und
- Fig. 4: Messkurven relativer Differenzdruckwerte für ein erfindungsgemässes und ein konventionelles Rohrbündel-Differenzdruckelement.

In den Figuren sind gleiche Teile mit gleichen Bezugszeichen versehen.

### WEGE ZUR AUSFÜHRUNG DER ERFINDUNG

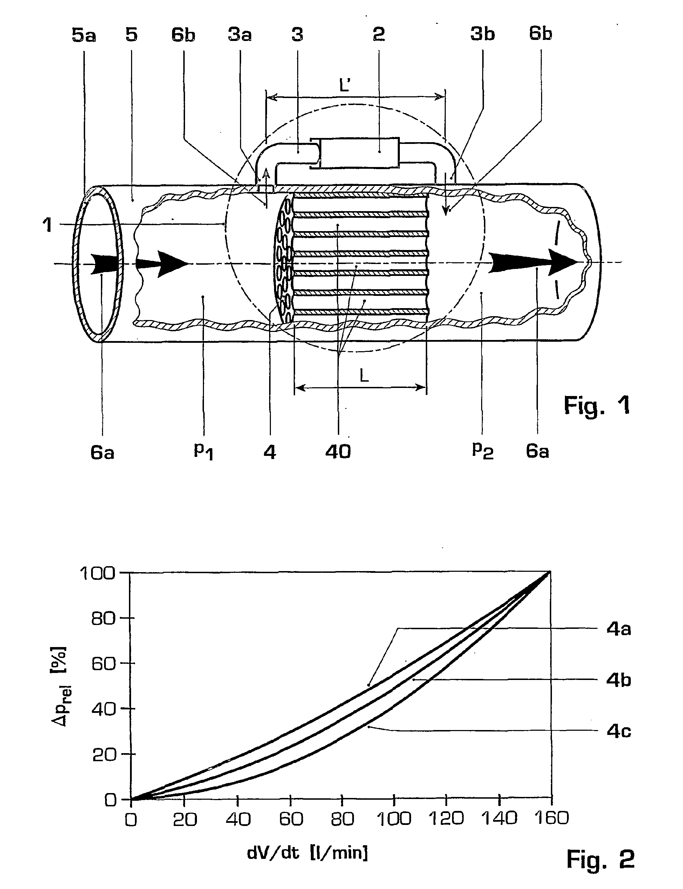

Fig. 1 zeigt eine Gaszähleranordnung 1 umfassend einen Gaszähler 2, der in einem Messkanal oder Bypass 3 angeordnet ist, und ein Differenzdruckmittel 4, das in der Hauptleitung 5 angeordnet ist. Erfindungsgemäß besitzt der Gaszähler 2 einen thermischen Durchflusssensor (CMOS-Anemometer) (nicht dargestellt) zur Bestimmung eines Volumens, Normvolumens oder Energiewertes des durchströmenden Gases. Der Bypass 3 ist an einer Seitenwand 5a der Gasleitung 5 angeordnet und weist im Bereich der Abzweigungen eine Eintrittsöffnung 3a und eine Austrittsöffnung 3b an der Seitenwand 5a auf. Der Bypass 3 ist hier im wesentlichen parallel zur Gasleitung 5 erstreckt. Andere, nicht dargestellte Anordnungen, Abzweigungen und Formen des Bypasses 3 sind ebenfalls möglich. In der Gasleitung 5 strömt ein Hauptgasstrom 6a, von dem ein kleiner Bypass-Gasstrom 6b abgezweigt wird. Das Abzweigungsverhältnis, d. h. das Verhältnis der Volumenflüsse 6b zu 6a, wird hauptsächlich durch das Differenzdruckmittel 4 vorgegeben.

Fig. 2 zeigt einen Vergleich des relativen Druckabfalls Δpᵣₑₗ als Funktion des Volumenflusses oder Volumenstroms dV/dt für verschiedene an sich bekannte Differenzdruckmittel 4, nämlich für eine dünnwandige Bienenwabenstruktur 4a, ein Rohrbündel 4b oder ein Venturirohr 4c. Die Bienenwabenstruktur 4a zeigt einen sehr linearen Druckanstieg als Funktion des Hauptvolumenstroms 6a. Nachteilig ist, dass die maximal erreichbaren Differenzdrücke zu klein sind, um genügend Durchfluss 6b im Bypass 3 zu erzeugen. Das Venturirohr 4c zeigt im allgemeinen einen zu geringen Bereich mit laminarem Strömungsverhalten und damit linearem Druckanstieg und linearem Abzweigungsverhältnis der Volumenströme 6b zu 6a. Das Rohrbündel-Differenzdruckmittel 4b weist eine Mehrzahl von Strömungskanälen 40 auf, die typischerweise rund sind, entlang der Hauptleitung 5 längserstreckt und parallel zueinander angeordnet sind. Herkömmliche Rohrbündel-Differenzdruckmittel 4b leiden auch an den genannten Nachteilen. Die Linearität ist zwar, wie aus Fig. 2 ersichtlich, besser als bei einem Venturirohr 4c, aber der Druckabfall Δpᵣₑₗ ist für kleine Volumenflüsse 6a zu gering.

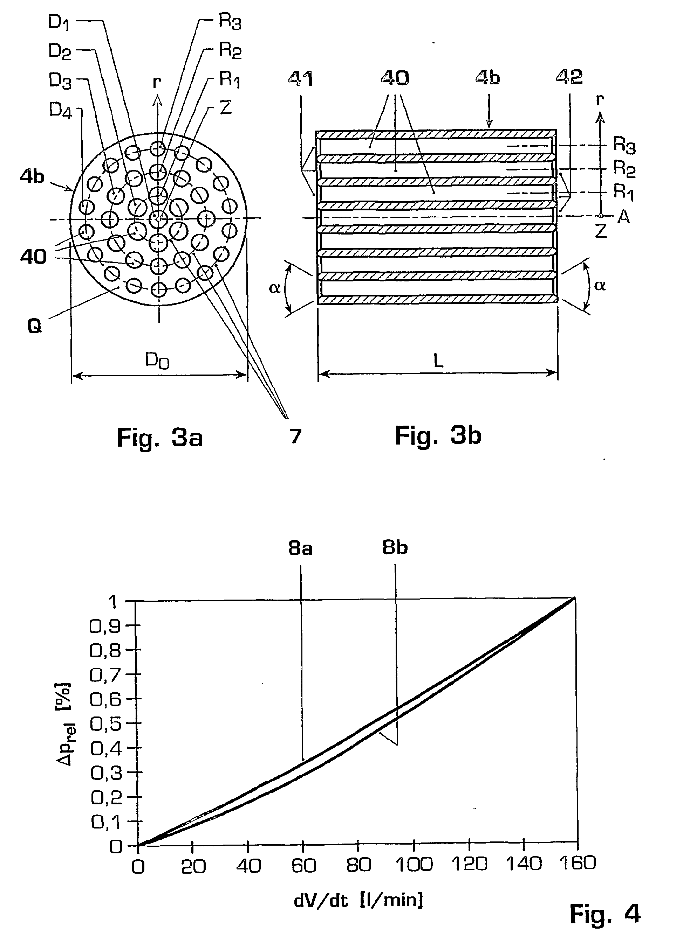

Fig. 3a, 3b zeigen ein Ausführungsbeispiel eines Rohrbündel-Differenzdruckmittels 4b. Die Strömungskanäle 40 sind in verschiedenen Radialpositionen R₁, R₂, R₃ oder allgemein R₁, ..., Rₙ mit n=ganzzahliger Index am Differenzdruckmittel 4 vorhanden und weisen einen typischen Durchmesser D₁, ..., D₄ oder allgemein D₁, ..., Dₘ mit m=ganzzahliger Index, insbesondere bei rundem Querschnitt den Durchmesser D₁, ..., D₄ oder allgemein D₁, ..., Dₘ auf. Mit Vorteil liegt m zwischen 2 und 6 oder 3 und 5 oder m=4. Erfindungsgemäss haben diejenigen Strömungskanäle 40, die näher an einer zentrumsnahen Radialposition R₁ am Differenzdruckmittel 4 angeordnet sind, einen grösseren Durchmesser D₁, D₂ als diejenigen Strömungskanäle 40, die näher an einer umfangsnahen Radialposition R₃ am Differenzdruckmittel 4 angeordnet sind, die einen kleineren Durchmesser D₃, D₄ aufweisen. Mit Vorteil nehmen die Durchmesser D₁>D₂>D₃>D₄ oder allgemein D₁> ...> Dₘ der Strömungskanäle 40, ausgehend von der Mittelachse A des Differenzdruckmittels 4 bzw. der Gasleitung 5, mit zunehmender Radialkoordinate R₁<R₂<R₃ oder allgemein R₁<...<Rₙ kontinuierlich ab. Im allgemeinen Fall, wenn die Abzweigungen 3a, 3b des Bypasses, d. h. die Eintritts- und Austrittsöffnungen 3a, 3b an beliebigen Radialpositionen R im Hauptrohr 5 positioniert sind, sollen erfindungsgemäss diejenigen Strömungskanäle 40, deren Radialposition R₁, ..., Rₙ näher an der Eintrittsöffnung 3a des Bypasses 3 liegen, einen kleineren Durchmesser D₁, ..., Dₘ aufweisen, und diejenigen Strömungskanäle 40, deren Radialposition R₁, ..., Rₙ weiter entfernt von einer Eintrittsöffnung 3a des Bypasses 3 liegen, einen grösseren Durchmesser D₁, ..., Dₘ aufweisen.

Fig. 4 zeigt einen Vergleich relativer Differenzdruckverläufe für ein konventionelles Rohrbündel-Differenzdruckmittel mit D₁=D₂=D₃=D₄ (8b) und ein erfindungsgemässes Rohrbündel-Differenzdruckmittel mit D₁≥D₂>D₃≥D₄ (8a). Man erkennt, dass durch die erfindungsgemässe Variation der Lochdurchmesser D₁, ..., D₄, nämlich die Vergrösserung zentrumsnaher Einströmöffnungen D₁, D₂ und/oder die Verkleinerung zentrumsferner, umfangsseitiger Einströmöffnungen D₃, D₄, der relative Differenzdruck Δpᵣₑₗ für kleine Volumenströme 6a erhöht und damit der gesamte Messbereich weitgehend linearisiert wird. Der Grund für diesen vorteilhaften erfindungsgemässen Effekt liegt darin, dass bei der vorliegenden laminaren Strömung 6a die Lochdurchmesser D₃, D₄ der nahe beim Bypass 3 liegenden Löcher stärkeren Einfluss auf den Gesamtdruckabfall Δp haben als diejenigen Lochdurchmesser D₁, D₂ nahe beim Zentrum Z des Differenzdruck-mittels 4 bzw. der Gasleitung 5. In Experimenten wurde ein maximal erreichbarer Gesamtdruckabfall Δp=p₁-p₂ des Differenzdruckmittels 4 von 2 mbar erreicht. Insgesamt ergibt sich ein grosser Bereich laminarer Strömung und weitgehender Linearität des Abzweigungsverhältnisses der Volumenströme 6b zu 6a ohne Einschränkung der oberen Messgrenze.

Mit Vorteil haben die Eintrittsöffnungen 41 und/oder Austrittsöffnungen 42 der Strömungskanäle 40 gemäss Fig. 3 Ansenkwinkel α zwischen 30°-90°, vorzugsweise 45°-75°, besonders bevorzugt 55°-65°. Dies bewirkt einen verminderten Differenzdruck für hohe Durchflussraten dV/dt und unterstützt damit eine Linearisierung des Messbereichs bei grossem Volumenstrom 6a. Die Ansenkung bewirkt nämlich, dass die bei hohen Durchflussraten dV/dt auftretenden teilturbulenten Strömungsverhältnisse (Übergangsbereich) zurückgedrängt werden. Da der Differenzdruck Δp über das Differenzdruckmittel 4 für den turbulenten Anteil der Strömung proportional zum Quadrat der Flussgeschwindigkeit oder des Volumenstroms dV/dt bzw. 6a ansteigt, resultiert ein verminderter Differenzdruck Δp oder Δpᵣₑₗ bei hohen Volumenströmen 6a. Mit den angesenkten Löchern 41 und/oder 42 wird also erreicht, dass bei hohen Durchflussraten der turbulente Strömungsanteil mit hoher Reynoldszahl gesenkt wird.

Erfindungsgemäβ ist zur weiteren Verbesserung der Laminarität des Volumenstroms 6a ein Verhältnis von Gesamtlänge L zu Gesamtdurchmesser D₀ des Differenzdruckmittels 4 grösser als 1, vorzugsweise 1,3 und besonders bevorzugt 1,5 gewählt. Dadurch wird die Ausbildung einer laminaren Rohrreibung in jedem Strömungskanal 40 verbessert und der relative Anteil turbulenter Strömung zurückgedrängt. Je grösser der Faktor Gesamtlänge zu Gesamtdurchmesser L/D₀ ist, umso linearer ist der Zusammenhang zwischen dem Volumenstrom 6a durch die Gasleitung 6a und dem vom Differenzdruckmittel 4 erzeugten Differenzdruck Δp=p₁-p₂, der wiederum proportional zum Volumenstrom 6b durch den Bypass 3 und den Gaszähler 2 oder dessen thermischen Durchflusssensor ist. Bevorzugt weisen die Strömungskanäle 40 einen runden Querschnitt auf und ist der typische Durchmesser D₁, ..., Dₘ gegeben durch den Durchmesser D₁, ..., Dₘ von Eintrittsöffnungen 41 der Strömungskanäle 40. Ebenfalls bevorzugt weisen die Strömungskanäle 40 einen über die Gesamtlänge L des Differenzdruckmittels 4 konstanten Strömungsquerschnitt auf.

Erfindungsgemäß sind wie in Fig. 3a und Fig. 3b gezeigt die Strömungskanäle 40 auf der Querschnittsfläche Q des Differenzdruckmittels 4 gleichabständig auf konzentrischen Kreisen 7 angeordnet. Die Querschnittsfläche Q des Differenzdruckmittels 4 kann ein Öffnungsverhältnis im Bereich 0, 3...0, 8, bevorzugt 0,3...0,6, insbesondere 0,4...0,5 haben.

Die Erfindungs betrifft eine Gaszähleranordnung 1 zum Messen eines Gasbezugs, insbesondere für Haushalte, umfassend einen Gaszähler 2 im Bypass 3 und das oben genannte Differenzdruckmittel 4 in der Gasleitung 5. Hierbei ist eine Längserstreckung L' des Bypasses 3 grösser als eine oder gleich einer Gesamtlänge L des Differenzdruckmittels 4 gewählt und das Differenzdruckmittel 4 in der Gasleitung 5 zwischen der Eintrittsöffnung 3a und der Austrittsöffnung 3b des Bypasses 3 angeordnet. Günstig ist eine mittige Anordnung des Differenzdruckmittels 4 zwischen den Bypassöffnungen 3a, 3b. Auf diese Weise ist sichergestellt, dass genau der durch das Differenzdruckmittel 4 definierte Differenzdruck Δp=p₁-p₂ über dem Bypass 3 anliegt. Durch die Ausbildung des Differenzdruckmittels 4, nämlich verringerte Durchmesser D₁, ..., Dₘ der Strömungskanäle 40 in der Nähe von Eintritts- und Austrittsöffnungen 41 des Bypasses 3, wird das Strömungsprofil über den Querschnitt Q des Differenzdruckmittels 4 bzw. der Gasleitung 5 so modifiziert, dass bei kleinen Volumenströmen 6a ein überproportional vergrösserter Differenzdruck Δp über dem Bypass 3 anliegt und den Bypass-Volumenstrom 6b antreibt.

Erfindungsgemäß weist der Gaszähler 2 einen thermischen Durchflusssensor, d.h. ein CMOS-Anemometer, mit einem Heizdraht und mindestens einem stromaufwärts und/oder stromabwärts angeordneten Temperatursensor auf. Insbesondere kann der Gaszähler 2 Mittel zur Kalibration des Gasbezugs in Normvolumeneinheiten, z. B. Liter/Minute (1/min), und/oder Energieeinheiten, z. B. Kilowatt/Stunde (kW/h), aufweisen. Dies ist detailliert in der WO 01/96819 beschrieben.

### BEZUGSZEICHENLISTE

- 1: Gaszähleranordnung
- 2: Gaszähler mit thermischem Durchflusssensor, CMOS-Sensorchip Gaszähler
- 3: Bypass
- 3a: Bypass-Eintrittsöffnung
- 3b: Bypass-Austrittsöffnung
- 4: Differenzdruckmittel
- 40: Strömungskanäle, Röhrchen
- 41: Eintrittsöffnungen
- 42: Austrittsöffnungen
- 4a: Bienenwabenstruktur
- 4b: Rohrbündel
- 4c: Venturirohr
- 5: Strömungskanal, Rohr, Hauptleitung
- 5a: Seitenwand der Hauptleitung
- 6a: Volumenfluss in Hauptleitung
- 6b: Volumenfluss in Bypassleitung
- 7: konzentrische Kreise
- 8a, 8b: relative Differenzdruckkurven

- α: Ansenkwinkel
- A: Mittelachse
- D₀: Gesamtdurchmesser
- D₁,..., D₄: Röhrendurchmesser
- L: Länge des Differenzdruckmittels
- L': Längserstreckung des Bypasses
- p₁, P₂: Druck vor, nach Differenzdruckmittel
- Δpᵣₑₗ: relativer Differenzdruck
- Q: Querschnittsfläche
- r: Radius
- R₁, ..., R₃: radiale Positionen
- U: umfangsseitige Position
- dV/dt: Volumenfluss
- Z: Zentrum des Differenzdruckmittels, zentrale Radialposition

## Patentansprüche

1. Gaszähleranordnung (1) zum Messen eines Gasbezugs, insbesondere im privaten, öffentlichen oder industriellen Bereich, umfassend einen Gaszähler (2) zur Bestimmung eines von einem Hauptgasstrom (6a) abgezweigten Bypass-Grasstrom (6b), , der in einem Bypass (3) zu einer Gasleitung (5) angeordnet ist, und ein Differenzdruckmittel (4), das in der Gasleitung (5) angeordnet ist und eine Mehrzahl von Strömungskanälen (40) aufweist, die einen typischen Durchmesser (D₁, ..., D₄) haben, wobei Strömungskanäle (40) in verschiedenen Radialpositionen (R₁, R₂, R₃) gleich abständig auf konzentrischen kreisen am Differenzdruckmittel (4) vorhanden sind, wobei
a) diejenigen Strömungskanäle (40), die näher an einer zentrumsnahen Radialposition (R₁) am Differenzdruckmittel (4) angeordnet sind, einen größeren Durchmesser (D₁, D₂) aufweisen als
b) diejenigen Strömungskanäle (40), die näher an einer umfangsnahen Radialposition (R₃) am Differenzdruckmittel (4) angeordnet sind, die einen kleineren Durchmesser (D₃, D₄) aufweisen,
c) eine Eintrittsöffnung (3a) und eine Austrittsöffnung (3b) des Bypasses (3) an einer Seitenwand (5a) der Gasleitung (5) angeordnet sind und
d) eine Längserstreckung (L') des Bypasses (3) größer als eine oder gleich einer Gesamtlänge (L) des Differenzdruckmittels (4) gewählt ist und das Differenzdruckmittel (4) in der Gasleitung (5) zwischen der Eintrittsöffnung (3a) und der Austrittsöffnung (3b) des Bypasses (3) angeordnet ist,
e) dass ein Verhältnis von Gesamtlänge (L) zu Gesamtdurchmesser (D₀) des Differenzdruckmittels (4) größer als 1 gewählt ist,
f) alle Strömungskanäle (40) die gleiche Länge aufweisen und
g) der Gaszähler (2) ein CMOS-Anemometer ist.

2. Gaszähleranordnung (1) nach Anspruch 1, **dadurch gekennzeichnet, dass** die Strömungskanäle (40) ausgehend von einer Mittelachse (A) des Differenzdruckmittels (4) mit zunehmender Radialposition (R₁, R₂, R₃) einen monoton abnehmenden Durchmesser (D₁>D₂>D₃>D₄) aufweisen.

3. Gaszähleranordnung (1) nach einem der vorangehenden Ansprüche, **dadurch gekennzeichnet, dass**
a) Eintrittsöffnungen (41) und/oder Austrittsöffnungen (42) der Strömungskanäle (40) Ansenkwinkel (a) aufweisen und
b) insbesondere dass die Ansenkwinkel (α) im Winkelbereich 30°-90°, vorzugsweise 45°-75°, besonders bevorzugt 55°-65° liegen.

4. Gaszähleranordnung (1) nach einem der vorangehenden Ansprüche, **dadurch gekennzeichnet, dass**
a) ein Verhältnis von Gesamtlänge (L) zu Gesamtdurchmesser (D₀) des Differenzdruckmittels (4) größer als 1,3 und besoNders bevorzugt 1,5 gewählt ist und/oder
b) die Strömungskanäle (40) einen runden Querschnitt aufweisen und der typische Durchmesser (D₁, ..., D₄) der Durchmesser (D₁, ..., D₄) von Eintrittsöffnungen (41) der Strömungskanäle (40) ist und/oder
c) die Strömungskanäle (40) einen über die Gesamtlänge (L) des Differenzdruckmittels (4) konstanten Strömungsquerschnitt aufweisen.

5. Gaszähleranordnung (1) nach einem der vorangehenden Ansprüche, **dadurch gekennzeichnet, dass** die Querschnittsfläche (Q) des Differenzdruckmittels (4) ein Öffnungsverhältnis in einem Bereich 0,3 ... 0,8, bevorzugt 0,3...0,6, insbesondere 0,4... 0,5 hat.

6. Gaszähleranordnung nach einem der vorhergehenden Ansprüche, **dadurch gekennzeichnet, dass** der Gaszähler (2) Mittel zur Kalibration des Gasbezugs in Normvolumeneinheiten (1/min) und/oder Energieeinheiten (kW/h) aufweist.

## Claims

1. Gas meter arrangement (1) for measuring a gas purchase, particularly in the private, public or industrial sector, comprising a gas meter (2) for determining a bypass gas stream (6b) branched off from a main gas stream (6a), which gas meter is arranged in a bypass (3) to a gas line (5), and a differential pressure means (4) which is arranged in the gas line (5) and has a plurality of flow ducts (40) which are of typical diameter (D₁, ..., D₄), flow ducts (40) being present in different radial positions (R₁, R₂, R₃) on the differential pressure means (4), wherein
a) those flow ducts (40), which are arranged nearer to a near-centre radial position (R₁) on the differential pressure means (4) have a larger diameter (D₁, D₂) than
b) those flow ducts (40) which are arranged nearer to a near-circumference radial position (R₃) on the differential pressure means (4) and which are of smaller diameter (D₃, D₄),
c) an inlet port (3a) and an outlet port (3b) of the bypass (3) are arranged on a side wall (5a) of the gas line (5), and
d) a selected longitudinal extent (L') of the bypass (3) is greater than or equal to an overall length (L) of the differential pressure means (4), and the differential pressure means (4) is arranged in the gas line (5) between the inlet port (3a) and outlet port (3b) of the bypass (3),
e) a selected ratio of overall length (L) to overall diameter (D₀) of the differential pressure means (4) is greater than 1,
f) all the flow ducts (40) have the same length, and
g) the gas meter (2) is a CMOS anemometer.

2. Gas meter arrangement (1) according to Claim 1, **characterized in that** the flow ducts (40) have from a mid-axis (A) of the differential pressure means (4) a monotonically decreasing diameter (D₁>D₂>D₃>D₄) with an increasing radial position (R₁, R₂, R₃) .

3. Gas meter arrangement (1) according to one of the preceding claims, **characterized in that**
a) inlet ports (41) and/or outlet ports (42) of the flow ducts (40) have countersink angles (α), and
b) in particular, **in that** the countersink angles (α) lie in the angular range 30° - 90°, preferably 45° - 75°, especially preferably 55° - 65°.

4. Gas meter arrangement (1) according to one of the preceding claims, **characterized in that**
a) a selected ratio of overall length (L) to overall diameter (D₀) of the differential pressure means (4) is greater than 1.3 and especially preferably 1.5, and/or
b) the flow ducts (40) have a round cross section and the typical diameter (D₁, ..., D₄) is the diameter (D₁, ... , D₄) of inlet ports (41) of the flow ducts (40), and/or
c) the flow ducts (40) have a flow cross section which is constant over the overall length (L) of the differential pressure means (4).

5. Gas meter arrangement (1) according to one of the preceding claims, **characterized in that** the cross-sectional area (Q) of the differential pressure means (4) has an orifice ratio in a range 0.3 ... 0.8, preferably 0.3 ... 0.6, in particular 0.4 ... 0.5.

6. Gas meter arrangement according to one of the preceding claims, **characterized in that** the gas meter (2) has means for calibrating the gas purchase in standard volume units (l/min) and/or energy units (kW/h).

## Revendications

1. Ensemble compteur à gaz (1) pour mesurer une fourniture de gaz, en particulier dans le domaine privé, public ou industriel, comprenant un compteur à gaz (2) pour la détermination d'un courant de gaz de dérivation (6b) dérivé d'un courant de gaz principal (6a), qui est disposé dans une dérivation (3) à une conduite de gaz (5), et un moyen de pression différentielle (4), qui est disposé dans la conduite de gaz (5) et qui présente une pluralité de canaux d'écoulement (40) qui ont un diamètre typique (D₁, .. , D₄), dans lequel des canaux d'écoulement (40) se trouvent sur le moyen de pression différentielle (4) dans différentes positions radiales (R₁, R₂, R₃) équidistantes sur des cercles concentriques, dans lequel
a) les canaux d'écoulement (40), qui sont situés plus près d'une position radiale (R₁) proche du centre sur le moyen de pression différentielle (4), présentent un diamètre (D₁, D₂) plus grand que
b) les canaux d'écoulement (40), qui sont situés plus près d'une position radiale (R₃) proche du périmètre sur le moyen de pression différentielle (4), qui présentent un diamètre (D₃, D₄) plus petit,
c) une ouverture d'entrée (3a) et une ouverture de sortie (3b) de la dérivation (3) sont disposées sur une paroi latérale (5a) de la conduite de gaz (5), et
d) une extension longitudinale (L') de la dérivation (3) est choisie supérieure ou égale à une longueur totale (L) du moyen de pression différentielle (4) et le moyen de pression différentielle (4) est disposé dans la conduite de gaz (5) entre l'ouverture d'entrée (3a) et l'ouverture de sortie (3b) de la dérivation (3),
e) un rapport de la longueur totale (L) au diamètre total (D₀) du moyen de pression différentielle (4) est choisi supérieur à 1,
f) tous les canaux d'écoulement (40) présentent la même longueur, et
g) le compteur à gaz (2) est un anémomètre CMOS.

2. Ensemble compteur à gaz (1) selon la revendication 1, **caractérisé en ce que** les canaux d'écoulement (40) présentent, à partir d'un axe central (A) du moyen de pression différentielle (4), un diamètre (D₁>D₂>D₃>D₄) décroissant de façon monotone lorsque la position radiale (R₁, R₂, R₃) augmente.

3. Ensemble compteur à gaz (1) selon l'une quelconque des revendications précédentes, **caractérisé en ce que**
a) les ouvertures d'entrée (41) et/ou les ouvertures de sortie (42) des canaux d'écoulement (40) présentent un angle de chanfrein (α) et
b) en particulièrement **en ce que** les angles de chanfrein (α) se situent dans la plage angulaire de 30° à 90°, de préférence de 45° à 75°, de préférence encore de 55° à 65°.

4. Ensemble compteur à gaz (1) selon l'une quelconque des revendications précédentes, **caractérisé en ce que**
a) un rapport de la longueur totale (L) au diamètre total (D₀) du moyen de pression différentielle (4) est choisi supérieur à 1,3, et de préférence à 1,5, et/ou
b) les canaux d'écoulement (40) présentent une section transversale ronde et le diamètre typique (D₁, .. , D₄) est le diamètre (D₁, .. , D₄) d'ouvertures d'entrée (41) des canaux d'écoulement (40), et/ou
c) les canaux d'écoulement (40) présentent une section transversale d'écoulement constante sur la longueur totale (L) du moyen de pression différentielle (4).

5. Ensemble compteur à gaz (1) selon l'une quelconque des revendications précédentes, **caractérisé en ce que** la surface de section transversale (Q) du moyen de pression différentielle (4) présente un rapport d'ouverture situé dans une plage de 0,3 à 0,8, de préférence de 0,3 à 0,6, et en particulier de 0,4 à 0,5.

6. Ensemble compteur à gaz selon l'une quelconque des revendications précédentes, **caractérisé en ce que** le compteur à gaz (2) présente des moyens d'étalonnage de la fourniture de gaz en unités de volume normales (1/min) et/ou en unités d'énergie (kW/h).
